# EUROPEAN PATENT APPLICATION

(11) **EP 3 157 233 A1**
(43) Date of publication of application: **19.04.2017**
(21) Application number: 15306614.7
(22) Date of filing: 13.10.2015
(51) Int. Cl.: H04M 1/725, H04M 1/02, H04N 7/14

(54) **HANDHELD DEVICE, METHOD FOR OPERATING THE HANDHELD DEVICE AND COMPUTER PROGRAM**

(71) Applicant: Thomson Licensing, 92130 Issy-les-Moulineaux (FR)
(72) Inventor: DUBACH, Stefan Andreas, 5078 Effingen (CH); KELLER, Anton Werner, 8905 Arni (CH)
(74) Representative: Huchet, Anne

(57) **Abstract**

The disclosure relates to a handheld device like tablet computer, mobile phone, eBook reader or the like. The handheld device (20) is equipped with an additional camera (22), mounted at the top edge of the handheld device(20) when the user (10) is holding the device in front of him/her for watching content on the display (204). This device allows for an improved surrounding supervision system. Such system is needed to warn the user (10) about any obstacle on the way while walking and holding the handheld device (20) in front of him/her for watching content on the display (204). The disclosure also concerns a corresponding method for operating the handheld device (20), in which a risk evaluation is performed to decide whether in the present situation there is a risk of distraction for the user (10) and starting capturing images with the additional camera (22) and/or back camera (21) for obstacle detection, if the determined risk level exceeds a predefined limit.

## Description

The disclosure relates to a handheld device. The disclosure also concerns a method for operating the handheld device and to a corresponding adapted computer program.

### Background

The use of mobile phones, in particular modern smart phones is becoming more and more extensive. People use it not only during public transportation but also in many other situations. This may become dangerous. In particular, while walking staring on their mobile phone, people are distracted from watching their surroundings and thus may collide with others or obstacles.

There is thus a need to capture the surroundings of a mobile device (e.g. smart phone or tablet computer) for warning the user against obstacles, other pedestrians, cyclists or even cars, etc. not recognized by the user gazing onto the screen.

More, this invention will support blind people or visually handicapped.

For that purpose systems are already proposed for surroundings capturing and user warning prompting the user with a respective onscreen message, acoustic signal, speech or vibration when the user is in danger of a potential collision. One such system is called CrashAlert. This is described in J. D. Hincapié-Ramos, P. Irani "CrashAlert: Enhancing Peripheral Alertness for Eyes-Busy Mobile Interaction while Walking". In that system a depth camera attached to the mobile device is mounted with its field of view orthogonal to that of the eyes-busy operator. A small slice of what the camera captures is displayed as a minimal footprint image on the mobile's screen. The system also performs some image processing and alerts the user with a red rectangle if an obstacle is immediately in front of the user. Another system is WalkSafe. This is described in T. Wang, G. Cardone, A. Corradi, L. Torresani and A. Campbell "WalkSafe: A Pedestrian Safety App for Mobile Phone Users Who Walk and Talk While Crossing Roads". WalkSafe makes use of the back camera of the mobile phone to detect vehicles approaching the user and alerting the user of a potentially unsafe situation. WalkSafe makes use of image preprocessing to compensate for the phone tilt, transforms into gray scale images and then makes use of a vehicle detection model which is refined by training.

Of course object recognition can be used for collision avoidance and warning. Object recognition is a very well-known technical field and lots of effort has been spent for research in this area from significant companies. For example, Google patent US8254699 "Automatic large scale video object recognition" describes an object recognition technique that creates a set of feature vectors that accurately predict the presence of visual objects. This enables a device not only detecting objects and obstacles, but also classifying them. Object classification is used to trigger several different actions in the device according to the type of object detected.

Another example is given by "Obstacles Detection and Avoidance on Sidewalks - D. Castelles, Universidad Politécnica de Madrid" describing a technique able to detect irregularities on sidewalks to support blind people avoiding obstacles on their way. The document refers to edge histogram, one of several technologies in object detection, to detect obstacles on the sidewalk as well as the sidewalk itself.

A large overview of techniques available for object recognition can also be found on Wikipedia:
**http://en.wikipedia.org/wiki/Outline of object recognition**

Given all these available recognition technologies integrated in a mobile phone it allows warning users from obstacles and also helping them to navigate. Since the device is able to detect the edges of sidewalks it is able to indicate to the user, for example, whether he is walking in a straight line on the sidewalk. Furthermore the device indicates, beside other pedestrians and obstacles, also crossings and branches to the user. The indication may be implemented in several ways such as visually, acoustically or in a haptic way such as vibrating and can therefore in addition assist blind people in navigating.

Thanks to object and edge recognition the navigation system becomes very accurate having deviations within a range of only a few centimeters.

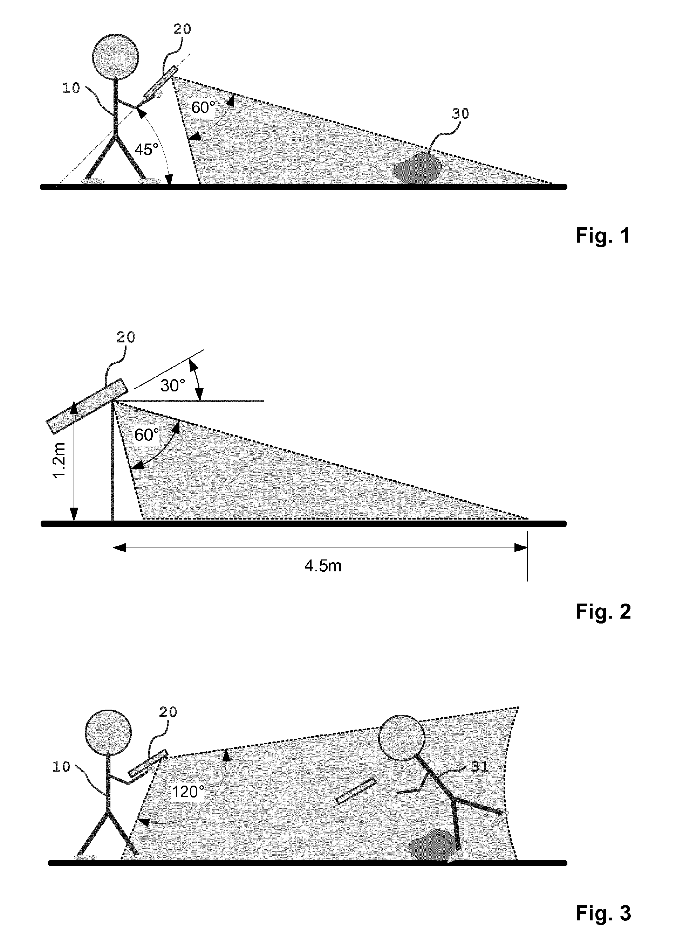

The approach of Fig. 1 making use of the back camera, which is opposite the screen facing the eyes has some deficits. The camera angle is limited by other reasons to around 50° or less. Fig. 3 gives an example of using the rear camera as a single capturing unit with a very wide-angle photo lens. However, since this camera will also be used to capture photos and videos it might be a disadvantage for the photo and video quality to use a very wide-angled objective for this camera.

### Summary

This and other objects are solved with a handheld device in accordance to claim 1 and a method for operating a handheld device according to the independent claim 9. A corresponding computer program is claimed in claim 15.

The provision of an additional edge camera for the purpose of surroundings surveillance has the advantage of an improved obstacle recognition since the edge camera widens the area in front of the user in which obstacle recognition takes place.

The dependent claims contain advantageous developments and improvements to the method and devices according to the disclosure.

The use of a wide-angle objective for the back camera would have the disadvantage for the use of photo shooting and video capturing. This can be avoided by using the additional edge camera.

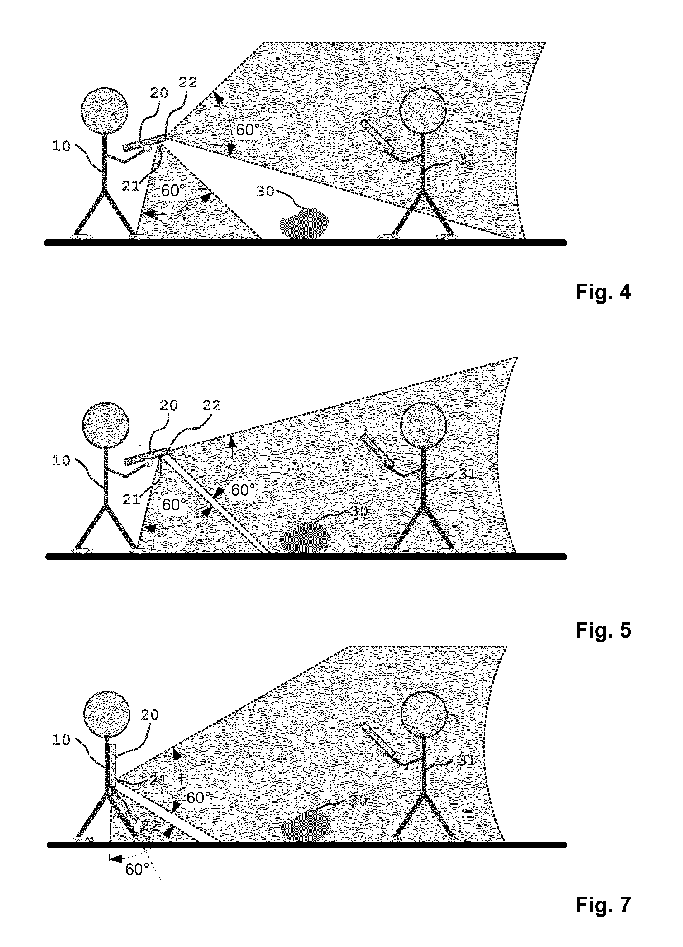

The edge camera may be mounted in tilted fashion towards the ground. This has the advantage that a possible detection area gap as shown in Fig. 4 is eliminated.

The use of a wide-angle photo lens for the edge camera is advantageous for further widening the surveillance area.

The use of a pivotal photo lens for the edge camera has the advantage that depending on the height of the user and on the way the user is holding the device, he can adjust the field of view such that a detection area gap is also eliminated if the user is holding the device differently.

The use of an accelerometer sensor and a gyroscope sensor is advantageous to automatically adjust the inclination angle of the pivotal edge camera. Also with such sensors the most reasonable camera (back camera and/or edge camera) may be selected in automated fashion.

The use of a GPS receiver is very advantageous to improve the warning accuracy. Some obstacles fixed to the ground may then well be archived in the map such that a timely warning may occur if the user is approaching such obstacle, without a need of an object recognition with the help of the camera. In such a way the system gets information from other devices in the surrounding and is already aware of the distance and moving direction of objects in the area of the user that are out of range to the device internal object recognizing system. It is then possible to navigate the user in such a way, that the system is preventing the user of walking towards an obstacle, even if the recognizing system has not yet detected the object that might become an obstacle to the user in a few moments.

The performing of a risk evaluation for the method according to claim 9 has the advantage that the surroundings surveillance doesn't need to be active all the time the user is operating the device. This certainly reduces the power consumption and leaves more resources remaining for other tasks.

For such method it is advantageous that the risk evaluation involves detecting if the user is paying attention to content shown on the display of the handheld device and if the user is moving while paying attention to content shown on the display. In this case the surveillance mode is not active e.g. if the user is sitting on a chair or standing still.

For detecting if the user is paying attention to content shown on the display it is advantageous to capture images with the front camera and determine with image processing if the user is staring on the display.

A more sophisticated risk evaluation involves evaluating which application program the user has activated in particular one or more of the application programs audio player, video player, communication program, photo viewer, gaming program, internet browser, word processor, spreadsheet program, and eBook reader and assigning a certain level of risk to the use of the respective program.

Advantageously, the warning of the user may be done in the form, overlaying a translucent warning image over the content shown on the display, showing the warning image full screen without overlaying, showing the warning image in a window on the display, wherein the window is positioned in a corner of the display or at the left, right, top or bottom side of the display.

In addition a buzzer may be used for audible warnings. The warning system may involve that the buzzing is controlled in frequency, or duty-cycle. This may be done for example in the way that a high amplitude indicates big obstacles, a high audible frequency indicates a close-range obstacle and the duty cycle may give an indication of the nature of the object.

### Drawings

Exemplary embodiments of the present disclosure are shown in the drawings and are explained in greater detail in the following description.

In the drawings:
- Fig. 1: shows a person staring on his mobile phone while walking;
- Fig. 2: illustrates the distance which is captured by the back camera when the cell phone is tilted by 30° towards the user;
- Fig. 3: illustrates the range which is captured by a wide-angle back camera when the cell phone is tilted by 30° towards the user;
- Fig. 4: illustrates an embodiment in which the cell phone in addition to the back camera is equipped with an edge camera positioned at the top side of the mobile phone;
- Fig. 5: illustrates the coverage of the surroundings in front of the person using his phone when the edge camera is mounted in tilted fashion;
- Fig. 6: shows a flow chart for a program which performs image processing, object recognition, risk evaluation and user warning;
- Fig. 7: illustrates an embodiment in which the cell phone is carried on necklace and is used as a warning system for a visually handicapped person;
- Fig. 8: illustrates in a) a warning message on screen of the mobile phone in the form of a full screen translucent object overlaying, in b) a warning message in the form of a full screen object illustration, in c) a warning message in the form of a picture in picture PIP object insertion and in d) a warning message in the form of a picture aside picture PAP object insertion;
- Fig. 9: shows a block diagram of a smart phone according to the disclosure;
- Fig. 10: shows an improved way of object recognition in the embodiment when a slightly wider flare angle photo objective is used for the back camera and edge camera, and;
- Fig. 11: shows an improved way of object recognition in the embodiment when a combination of two edge cameras is used for the collision avoidance system.

### Exemplary embodiments

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Thus, for example, it will be appreciated by those skilled in the art that the block diagram presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

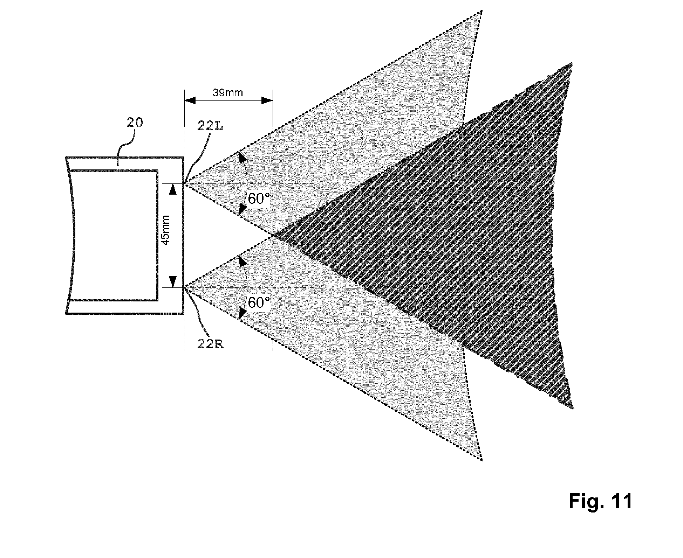

**Fig. 4** shows an embodiment of the invention in which the obstacle recognition with a mobile device 20 is improved. An additional camera is mounted at the edge of the mobile device 20. This mobile device 20 can be any portable handheld device. Typical examples are a mobile phone, in particular smart phone, a tablet computer, an eBook reader and a navigation system. In the following the mobile device 20 will be exemplified with a smart phone. The hardware implementation will be described in a separate paragraph in connection with Fig. 11. Dependent on the capturing angle of the objective used for the back camera 21 and edge camera 22 the recognizing system in Fig. 4 has the disadvantage of having a detection area gap.

To overcome this disadvantage, **Fig. 5** shows the mounting of a tilted edge-camera 22 with a predefined mounting angle in the housing of the mobile device 20. In such a way the detection area gap is completely eliminated. Thus the obstacle recognition system is improved. With the help of the edge camera 22 the obstacle recognition will happen more in advance compared to the obstacle recognition system which relies on the back camera 21, only. Depending under which angle the user is holding the mobile device 20, it may be required to use only the edge camera 22 for obstacle recognition or both cameras 21 and 22. It's up to the detecting software (application program) using one or both cameras and whether it is needed to hand over a critical object recognized in the image of the edge camera 22 to the back camera 21 before a warning message is output.

Unfortunately, present cameras running are consuming energy and thus reducing the working period between charging cycles. It is not sufficient just turning on and off the application periodically, respectively using one or two cameras for a good battery management.

It is part of the disclosure that the user gets the possibility, besides other input parameters, to define the relative distance of an object the user wants to be warned for at earliest (maximum distance) or at the latest (minimum distance). Furthermore, the warning distance (range) may be configured to be dynamic, dependent on the moving speed of the user as well as of the recognized object. With modern object recognition, it's possible to distinguish certain types of obstacles. For example a car can be detected, a bicycle or a pedestrian. Those different obstacles are signalled to the user by dedicated signals. The type of warning and its parameters e.g. volume of acoustic warnings, intensity of vibration and position and type of visual warnings will be adjustable in a configurations menu.

For real savings of energy in a mobile device 20, the obstacle detection system is managed (activated) in an automatic manner in dependence on one or more of the following conditions:
1. Detecting user attention by use of the front-camera by supervising the user's gaze
2. Supervising screen activation, running applications and user-inputs
3. Evaluating signals of built-in sensors and camera management
4. Visually handicapped mode

### 1. Detecting user attention by use of the front-camera by supervising the user's gaze

The main problem of people using their mobile devices 20 while walking on the streets is: As soon as a message is announced or expected they are taking their mobile device 20 out of the pocket and check if a message has arrived and read the message on the screen, totally unaware of the surrounding. In one embodiment of the disclosure the detection of a staring on the screen is done with one or more of the techniques gaze-tracking, eye-tracking, and head-tracking. Such techniques have been developed in past years and are now readily available. Often one or more built in cameras are utilized for that purpose that work in visual or infrared light.

During certain application, gaze detection can be replaced or supplemented by supervising touching screen action, because using the touchscreen coincides with the gaze.

As soon as such a staring is detected, the object recognition and warning system is activated - and deactivated when the staring is over. Often while staring, the user's gaze is flickering between walking direction and on the screen back and forth. For avoiding too many on-off cycles the turn ON operation shall be immediate and the turn-off operation with a delay of at least 1-2 seconds. The activation controlling of the obstacle detection system then has a hysteresis behaviour.

### 2. Supervising screen activation, running applications and user-inputs

The controlling of the obstacle detection system of paragraph 1 is enhanced by supervising the (touch-) screen, running applications and user-inputs. As soon as the user activates the screen there is a risk of distraction. Either the user will stare on the screen seconds later or he will make some user-inputs by peering on the screen. In both cases a distraction is foreseen. The risk of distraction is rising as soon as more than the home screen is activated. Playing movies, having an activated game open, showing emails for reading or supporting user inputs with touch keys, sliders etc. in user menus on screen involve different risks.

It is therefore proposed in this disclosure a kind of risk evaluation and management for controlling the obstacle detection system. Table 1 represents a straightforward approach that is expandable. Basically the coupling of all the screen events with the detection of user movement makes sense. This will be described in section 3.

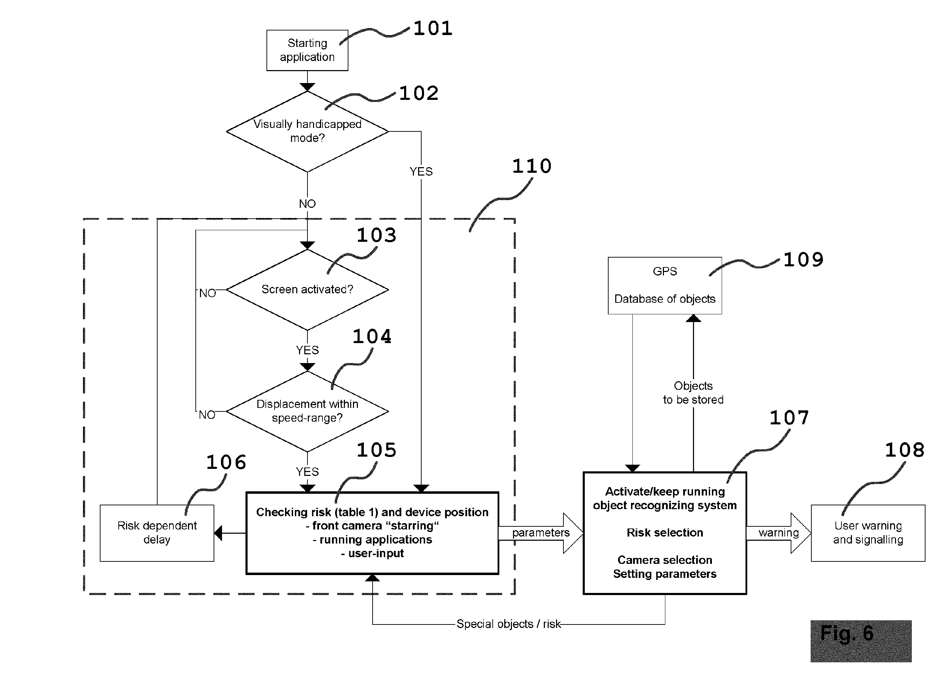

If the screen of the mobile device 20 is activated and displacement is detected the system checks whether there is a risk of user distraction according to **Table 1** by supervising the front-camera 208, running applications and user-inputs. The computer program for implementing the object recognizing system is designed according to the flow chart as shown in **Fig. 6****.**

It is an optional feature, to present to the user a possibility in a configurations menu to assign certain respective risk levels to dedicated applications. Also the user gets an option to define the range of the displacement speed he/she wants the system to be activated. The range does also include zero displacement. This is helpful to warn the user if a person or an object is moving towards the user when he is residing at a spot.

All ongoing actions of the device are detected, analysed and categorized into a predefined level of risk. For example, using the touchscreen without displacement, the surrounding does not need to be supervised. **Table 1** shows risk assignment and corresponding action for some exemplary situations:

**Table 1: Risk categorizing**

| **On screen actions** | **displacement** | **risk** | **action** |
|---|---|---|---|
| Screen off | x | zero | none |
| Home-screen | no | zero | none |
| | yes | low | none, checking periodically "risk" |
| Playing music | no | zero | none |
| | yes | low | none, checking periodically "risk" |
| Photo / movie playback | no | zero | none |
| | yes | medium | activating supervising system |
| Selecting a program | no | zero | none |
| | yes | high | activating supervising system |
| User input of scrolling type | no | zero | none |
| | yes | very high | activating supervising. system |
| User input of typing type | no | zero | none |
| | yes | very high | activating supervising. system |
| Just holding device in hands (screen on) | no | zero | none |
| | yes | low | none, checking periodically "risk" |
| Handicapped mode (user request) | x | | activating supervising system |

### 3. Evaluation and use of signals of built-in sensors for camera management

Permanently turned on camera(s) and the permanent evaluation of signals consumes a lot of energy. For saving battery energy it makes sense to bind the activation of the application to phases when the screen is activated and the user is moving. Detecting activated screens does marginally consume energy. To detect user movement the system makes use of the internal gyroscopic sensor and/or accelerometer 213. Supervising accelerometers in modern mobile phones is performed permanently for different applications, anyway. The displacement speed shall be taken in account for cycling the supervising. If the user is moving slowly, it is sufficient to capture intermittent pictures of the surrounding. This happens e.g. once a second (or less) and saves energy by switching off the camera(s) as well as the processing for the rest of the time. It is possible that the camera maintains its focus and that e.g. the camera chip is switched on and off, only for energy saving purposes. The frequency of image capturing may be adapted according to the user's moving speed, changes of direction and/or the recognition of a (moving) object that might become an obstacle. If the user is moving slowly, only one camera supervising is sufficient. Preferably, in particular, when the user is moving fast, it is the edge camera 22 which is used first until an object is recognized which is approaching the user. If the object is coming closer (equivalent to the user 10 approaching the obstacle 30, 31), at a certain distance the back camera 21 will be used in addition for supervising **(****Fig. 5****).**

Another factor to be considered is inclination-angle the user 10 holds the device. The system selects to most reasonable camera for recognizing objects. Other cameras will remain switched off to save energy. The frequency of capturing images is increased for a short period when the device changes its inclination in a fast manner to get accurate information about the surrounding as quickly as possible.

If the device offers multiple cameras for object recognition and only intermittent image capturing is activated, it is not necessarily required to make use of all the available cameras all the time. If e.g. the edge-camera 22 of the mobile device 20 gives enough evidence, that there is no obstacle in the user's way for the next few seconds, it is not necessary to switch on the rear camera 21 in addition. However, if there is a an object detected in the picture of the edge-camera 22 moving towards the user and leaving the capturing area of the edge-camera 22 towards the rear camera 21 of the mobile device 20, the rear camera 21 is activated and takes over capturing. The edge-camera 22 thus is deactivated for a time interval to save energy.

Other useful detectors are the grip-detector (e.g. is the device in a hand) and the ambient-light detector (e.g. is the device in a pocket). Even a received weather forecast could be useful and taken in account together with local parameters (temperature, humidity, etc.). Temperatures near zero and the visual detection (camera) of a glossy pavement mean slip-danger, likewise if snow is detected.

The surrounding supervising system may be improved by combining it with the available positioning and communication systems built-in to the device (e.g. GPS, Wi-Fi, Bluetooth). In such a way the system gets information from other devices in the surrounding and is already aware of the distance and moving direction of objects in the area of the user that are out of range to the device internal object recognizing system. It is then possible to navigate the user 10 in such a way, that the system is preventing the user of walking towards an obstacle 30, 31, even if the recognizing system has not yet detected the object that might become an obstacle to the user.

As an additional improvement the capturing system may be combined with audio capturing-, infrared-, radar- or ultrasonic-systems available in the device to adjust and refine position estimation of captured objects in the surrounding of the device.

### 4. Visually handicapped mode

A special mode will be the visually handicapped mode where the circumstances are different. The user needs environmental information even when standing still.

The visually handicapped mode is started on request by the user 10. The action to start the mode is user configurable and may be for example: a specific movement (taking the phone out of the pocket) and just holding it in front of the user, holding it in a certain way, pressing a button or giving a spoken command (voice control). As shown in **Fig. 6****,** the object recognizing system is started in step 101 and branches to the visually handicapped mode in step 102 if that is switched on. It observes the surrounding to warn the user from obstacles. In this "white cane" mode the system is switched on and off by user control and the risk management of table 1 is adapted. Warnings will be transmitted e.g. acoustically or by vibrating pulses.

For comfort reason, the mobile device 20 may also be carried on a necklace, as shown in **Fig. 7****,** while the object recognition still works properly. There is a warning, if the accelerometer signals that the device is carried the wrong way round. Fig. 7 shows the carrying of the mobile device on a necklace in upside down position. In that position the cameras must be used appropriately. Now the edge-camera 22 serves for the close-up range and the rear-camera 21 for the long-range object recognition.

If the mobile device 20 is carried the wrong way round (rear-camera facing towards the user), the picture captured from the rear-camera 21 will contain no recognizable objects and will most probably be black at all and the user will be informed.

### Signalisation

For visually handicapped people a clear signalling of obstacles is important. Signalling ranges from audible signals and spoken words to the buzzer or an external device(s) (watch, wristband, etc.). A second buzzer would allow direction advices. Both buzzers must be of different type (haptic response) or positioned on different edges of the device. A controlled buzzing amplitude, frequency or duty-cycle will give additional support. Motor driven buzzers will allow less differentiated signalling than the piezo-type.

For example, high amplitude indicates big obstacle, high audible frequency close-range and the duty-cycle gives an indication of the nature of the object. Alternatively one of the signals could be used for adjusting or optimizing the pointing direction.

### Support by GPS and object database

By supporting the system with GPS data, a more efficient detection of objects/obstacles is possible.
- Due to the knowledge of the position on a roadmap, many objects are already known (houses, lakes, streets, etc.).
- Based on an exact position, it's possible to maintain and question a database of objects/obstacles. This database is updated with new entries permanently or on user request via the feedback branch from step 107 to step 105 in Fig. 6.
- The proposed system in combination with GPS and roadmaps allows visually handicapped reaching almost any place.

### Bypassing obstacles mode

To improve the support of visually handicapped people the mobile device 20 is equipped with an indication to the user which way would be the most efficient for bypassing an obstacle. The indication may be implemented in an easy way such as an additional indication whether the user should move to the left or to the right to avoid the obstacle. In a more comprehensive implementation the mobile device 20 gives a brief description of the object and indicates not only the shortest or best direction to pass the obstacle, but also makes an announcement of the distance the user must move to the left or to the right.

For moving objects the mobile device 20 gives an indication of the moving speed of the object and a hint whether the object could become an obstacle 30, 31 for the user or not. According to the moving speed and moving direction of the user 10 and a currently detected moving object the mobile device 20 may suggest to slow down to the user in order to avoid that the detected moving object becomes an obstacle to the user.

### General visualisation of obstacles

Some kind of "visualisation" in the handicapped mode was already presented. In another embodiment, the user is not only warned by an acoustic or vibrating signal but also by displaying the "object of danger" on the screen. The screen-oriented gaze is confronted with the obstacle. Some flashing effects support regaining the attention of the user towards the street.

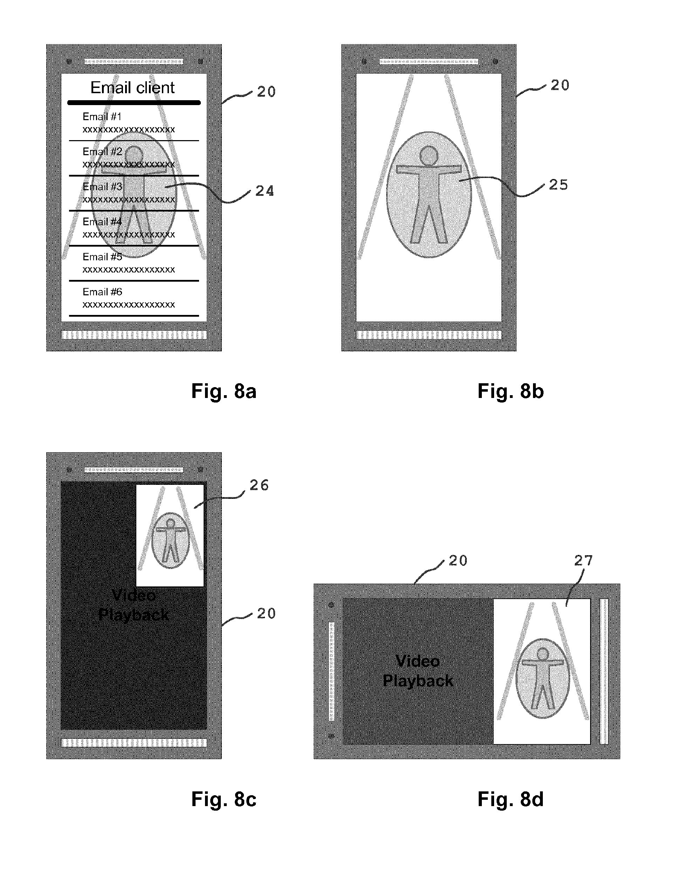

In this configurable mode, a user will be warned visually with a message 24 about an object that may become an obstacle 30, 31 to him whereby the picture captured from the camera 22, 21 is shown on the screen in the background of an active translucent application (e.g. email client) as shown in **Fig. 8a****,** as a non-translucent full-screen picture 25 in **Fig. 8b** or as a small additional picture 26 on top (PIP) or a small picture 27 aside (PAP) of the current running application (e.g. video player) as given in the example in **Fig. 8c** and **Fig. 8d****.** The camera is switched from the recognizing mode (e.g. one picture per second) to full frame-rate video mode and in addition the recognized object is highlighted within the real-time picture on the screen.

### Hardware and software

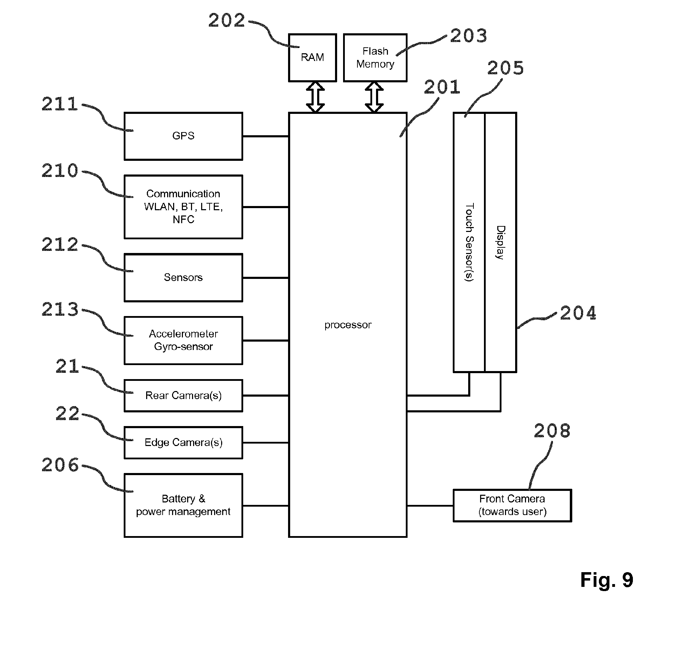

The proposed hardware of the mobile device 20 is basically equal to the hardware and functionality of a mobile phone as shown in **Fig. 9****.** This includes processor 201, memory 202 and 203, display panel 204, touch-sensor 205, sensors 212, and 213, GPS receiver 211, cameras 208, and 21, power-management circuit 206 and communication interfaces 210. An additional hardware component is the edge-camera(s) 22 of Fig. 5.

The software of this invention is stored in the FLASH-Memory 203 and running on the processor 201 by use of the RAM 202. The processor 201 is further responsible for power management, camera selection and activation according to the signals from the accelerometer, the gyroscopic-sensor and the touch-sensor(s). If the application requests GPS information or communication capabilities, the processor operates the communications hardware and GPS receiver 211 accordingly. All these functions are supported by the operating system of the mobile phone.

The software implementation according to the disclosure is depicted in the flowchart of the object recognizing and warning application in **Fig. 6****.** The application can be activated in the normal mode or in the handicapped mode, either by a set preference or a user input as explained before.

The program starts in step 101. In branching step 102 it is checked, if the visually handicapped mode is activated (will be explained later). If not, the program proceeds to the risk evaluation block 110. In this "normal" mode, the system constantly checks in step 103 if the screen is activated and displacement exists (reading out of accelerometer or gyro data). Of course, screen here means any form of a display panel, LCD, OLED, E-Ink or the like even if it is in the form of a head-up display or data glasses. If the screen is not activated, the program returns back to the beginning of step 103 thereby closing a loop which is run through until it is finally detected that the screen is activated. Then the program proceeds to step 104 in which it is checked if the user is moving in the predetermined speed range where supervision of the surrounding is recommended. If not, the program branches back to step 103. If there is a positive detection result for both conditions, the system evaluates the risk in step 105 in a constant loop by checking if the user stares on the screen (by checking the front camera 208). Further the system checks the running applications (what they display) and user-inputs. A set of parameters is generated, according to table 1. These parameters describe the risk. The parameters are used for example; to select the appropriate camera(s) and configure the rate of capturing and analysing of the surrounding (obstacle detection). The object recognition system is activated according to the risk.

In step 105 the risk evaluation is done with the help of Table 1. This means that an action is selected out of the table according to the risk evaluation. Depending on whether the action is "none", or "none, checking periodically the risk", a risk dependent delay is inserted in step 106 before the program returns back to step 103 for the next supervising cycle. Applications such as email clients or video players activated while the displacement is in the predefined range of speed will, for example, be categorized as involving a risk and will therefore activate the object recognizing system.

If the selected action is "activating supervising system", the program continues with step 107 in which the obstacle detection algorithm is working. Here, the algorithm is performing image capturing and image processing for object recognition. Dependent on the object/obstacle recognition, the risk analysis is re-triggered and the current risk is reevaluated. A new parameter-set is passed to the running object recognizing system.

Objects recognized may be entered in a database 109 with their position information so that the GPS receiver can remember them when the user walks the same way sometime later. GPS information in combination with database 109 is incorporated in the object recognizing system to refine and improve the detection capabilities or for orientation purposes.

If an obstacle 30, 31 is detected close to the user, a warning message will be output in step 108. Warnings and information are outputted to the user dependent on operating mode, misuse and danger (obstacle in range).

There is a feedback branch from step 107 to the risk evaluation step 105.

Screen activation and displacement is checked regularly for re-evaluating the risk. The evaluation rate is dependent on the present risk.

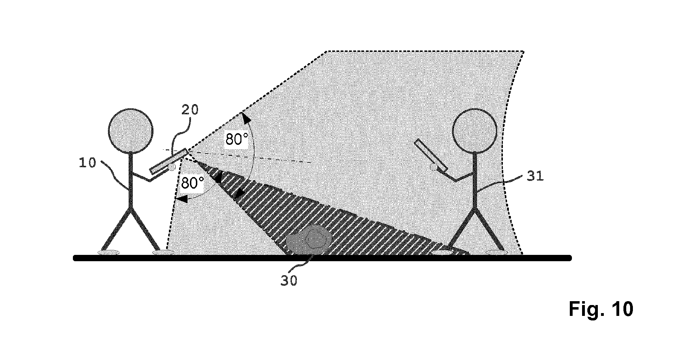

To improve the detection reliability of the system the rear camera 21 is used together with the tilted edge-camera 22 both having a slightly wider angled objective as shown in **Fig. 10****.** The tilted edge-camera 22 in this case has a mounting angle as shown in Fig. 5. In the area where the pictures of the two cameras overlap the pictures of both cameras will be evaluated simultaneously to improve both the calculation of the obstacle distance and the detection reliability. Of course, the microprocessor 201 needs to be powerful enough to evaluate both camera images in parallel which may be a limiting factor for this embodiment.

**Fig. 11** shows the use of two additional edge-cameras 22L and 22R instead of only one as shown in Fig. 5. In this case it is possible to render a 3D model of the user's surrounding in real time which gives an even better estimation of the distance and moving direction of obstacles relative to the user. Picture stabilisation utilizing the gyroscope-sensor 213 and corresponding picture processing is known and useful for this purpose but also for the other embodiments described herein.

Instead of a fixed mounted camera (edge-, front- or rear camera) an adjustable camera position helps getting the best camera field of supervision. In particular, an edge camera 22 having at least one pivot axis allows a more flexible use. In a more advantageous built-up the camera is mounted with an electrically controlled mounting allowing a scanning and panning of the camera without moving the mobile device. This scanning and panning can be done by small servo motors shifting the camera's viewing direction as well as by magnetically or piezo-controlled actuators. While walking the mobile device 20 stays not stable but moves or rotates in any direction. This rolling, rotating, moving or yawing is compensated or at least reduced by known picture stabilisation techniques be it mechanically or with image processing as well as by this camera having the electrically controllable viewing direction.

In a further embodiment using a wide angle objective (e.g. 170°) together with a high resolution image sensor it is possible to process the relevant part of the captured image only. This relevant part could be extracted with the help of the built-in camera sensors 212, 213, GPS receiver 211, gyroscope-sensor 213 and accelerometer 213 which provide the information about the direction in which the user is moving on. The relevant part of the image captured with wide-angle photo lens is therefore the image section towards the user is moving on.

A detachable infrared filter and an optional infrared light source (integrated in the mobile device) enable object recognition in dark areas or at night. Explanation: Most camera chips have a high sensitivity for infrared light and for photographic purposes have an infrared suppressing filter added. Some known video cameras take advantage of that effect and use the camera chip in a night-shot mode by detaching that filtering.

The invention is not restricted to traditional optical cameras as capturing units. It includes any other (future) capturing unit usable for object recognition like plenoptics, radar-like sensors and ultrasonic sensors.

The disclosure is not restricted to the exemplary embodiments described here. There is scope for many different adaptations and developments which are also considered to belong to the disclosure.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device, an alert-output-device/communication device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

## Claims

1. Handheld device (20) comprising a display (204), at least one memory (202, 203), a processor (201), a back camera (21) and power circuitry (206), **characterized in that** it further comprises at least one additional camera (22) mounted at the top edge of the handheld device (20) when the user (10) is holding the device to watch content on the display (204).

2. Handheld device according to claim 1, wherein the additional camera (22) is tilted with a predefined mounting angle in the housing of the handheld device (20).

3. Handheld device according to claim 1 or 2, further comprising a front camera (208).

4. Handheld device according to one of the previous claims, wherein the additional camera (20) is equipped with a wide-angle photo lens.

5. Handheld device according to one of the previous claims, wherein the additional camera (22) is mounted pivotally around an axis parallel to the axis along the edge of the handheld device (20) on which the edge camera (22) is positioned.

6. Handheld device according to one of the previous claims, further comprising at least one communication interface (210), such as Wi-Fi interface, Bluetooth interface, LTE interface, GSM interface, NFC interface.

7. Handheld device according to one of the previous claims, further comprising one or both of an accelerometer sensor (213) and a gyroscope sensor (213) for adjusting the additional camera's inclination angle or for detecting user movement.

8. Handheld device according to one of the previous claims, further comprising a GPS receiver for generating warnings depending on a reaching a geographic location or for detecting user movement and/or further comprising at least one sensor, in particular touch sensor for determining if the user is interacting with the handheld device.

9. Method for operating the handheld device (20) according to one of the previous claims, comprising capturing images with the additional camera (22) and/or the back camera (208), processing the captured images to identify obstacles (30, 31) towards which the user (10) of the handheld device (22) is moving, warning the user (10) if he/she is approaching the identified obstacle (30, 31), the method further comprising performing a risk evaluation to decide whether in the present situation there is a risk of distraction for the user (10) and starting capturing images with the edge camera (22) and/or back camera (21) for obstacle detection, if the determined risk level exceeds a predefined limit.

10. Method according to claim 9, wherein the risk evaluation involves detecting if the user (10) is paying attention to content shown on the display (204) of the handheld device (20) and if the user (10) is moving while paying attention to content shown on the display (204).

11. Method according to claim 9 or 10, wherein detecting if the user (10) is paying attention to content shown on the display (204) involves capturing images with the front camera (208) and determining with image processing if the user (10) is staring on the display (204).

12. Method according to one of the claims 10 to 11, wherein the risk evaluation involves evaluating which application program the user has activated, in particular one or more of the application programs audio player, video player, communication program, photo viewer, gaming program, internet browser, word processor, spreadsheet program, and eBook reader, and assigning a certain level of risk to the use of the respective program.

13. Method according to one of claims 9 to 12, further comprising sensor evaluation, in particular of one or both of the sensors (213) accelerometer and gyroscope, for determining information about the position in which the user (10) is holding the handheld device (20), wherein in particular the inclination angle is determined with which the user (10) is holding the handheld device (20) and wherein the inclination angle is used for controlling whether the edge camera (22) is used for image capturing or the back camera (208) or both.

14. Method according to one of claims 9 to 13, wherein warning the user (10) if he/she is approaching the identified obstacle (30, 31) involves at least one of: overlaying a translucent warning image over the content shown on the display (204), showing the warning image full screen without overlaying, showing the warning image in a window on the display (204), wherein the window is positioned in a corner of the display (204) or at the left, right, top or bottom side of the display (204).

15. Adapted computer program comprising computer-executable instructions that when run in a computer system cause the computer system to perform the method of one or more of claims 9 to 14.
